# EUROPEAN PATENT APPLICATION

(11) **EP 3 560 675 A1**
(43) Date of publication of application: **30.10.2019**
(21) Application number: 18168875.5
(22) Date of filing: 24.04.2018
(51) Int. Cl.: B29C 45/16, B29C 45/14, B29C 70/88, B32B 27/40, B29K 75/00, B29K 69/00

(54) **THERMOPLASTIC COMPOSITE ARTICLE AND MANUFACTURING METHOD AND USE THEREOF**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a thermoplastic composite article and a manufacturing method thereof. The thermoplastic composite article provided by the present invention comprises a matrix zone and a functional zone. The matrix zone comprises a composite substrate and a coating, the coating covers a surface of the composite substrate, and the coating and the functional zone are obtained by a reaction of a coating composition comprising the following components: one or more polyisocyanates, and one or more H-active polyfunctional compounds, wherein the H-active polyfunctional compounds are preferably one or more polyols. The method for manufacturing the thermoplastic composite article provided according to the present invention is characterized by a simple process, high efficiency, a high yield and environmental friendliness; and the obtained thermoplastic composite article, especially an electronic product housing, can have good electrical signal transmission performance or structural components.

## Description

The present invention belongs to the field of thermoplastic composites, and particularly relates to an electronic product component manufactured based on a thermoplastic composite as well as a manufacturing method and use thereof.

Lighter, thinner, stiffer and more aesthetic portable electronic products have always been the goals of electronic product manufacturers and consumers. Carbon fiber reinforced thermoplastic composites such as carbon fiber reinforced polycarbonate composites have high rigidity, a low specific gravity and easy formability. Accordingly, in recent years, more and more electronic product manufacturers have chosen carbon fiber reinforced thermoplastic composites to manufacture housings of portable electronic products.

As known in the industry, carbon fibers have an electromagnetic shielding effect on electrical signals. Electronic product housings made of carbon fiber reinforced thermoplastic composites can affect the transmission of electrical signals, for example, the radio signal transmission for communication between electronic products and the outside, and the signal transmission among internal circuits of electronic products.

To avoid or reduce interference, some traditional technical solutions are used in the industry when carbon fiber reinforced thermoplastic composites are used to manufacture electronic product housings. In the prior art, one technical solution for manufacturing an electronic product housing using a carbon fiber reinforced thermoplastic composite is as follows: a carbon fiber reinforced thermoplastic composite sheet is used as the main body of the electronic housing, a glass fiber reinforced polycarbonate material is used in an area in need of electrical signal transmission, and then the outside of the housing is coated.

In the prior art, another technical solution for manufacturing an electronic product housing using a carbon fiber reinforced thermoplastic composite is as follows: a carbon fiber reinforced polycarbonate or its plastic alloy is subjected to insert injection molding on a surface of an injection-molded glass fiber reinforced polycarbonate thermoplastic composite article, while the carbon fiber reinforced polycarbonate or its plastic alloy is prevented from being injection-molded in an area in need of electrical signal transmission during insert injection molding, and then the outside of the housing is coated.

The above technical solutions of the prior art have complex technological processes, low production efficiency, lower qualification rate and higher cost, while multiple spraying using solvent-based coatings can lead to the volatilization of more organic compounds, which affects the environmental safety and fails to meet the development trend of green production. Accordingly, it is desirable in the industry to provide a method for manufacturing a thermoplastic composite article (especially an electronic product housing) which is characterized by a simple process, high efficiency, a high yield and environmental friendliness as well as a product.

One object of the present invention is to provide a thermoplastic composite article. The thermoplastic composite article comprises a matrix zone and a functional zone. The matrix zone comprises a composite substrate and a coating, the coating covers a surface of the composite substrate, and the coating and the functional zone are obtained by a reaction of a coating composition comprising the following components: one or more polyisocyanates, and one or more H-active polyfunctional compounds, wherein the H-active polyfunctional compounds are preferably one or more polyols.

The composite substrate may comprise a carbon fiber reinforced polycarbonate composite.

The carbon fiber reinforced polycarbonate composite may comprise a carbon fiber reinforced polycarbonate composite sheet. The carbon fiber reinforced polycarbonate composite sheet comprises 10-70 wt.%, preferably 40-60 wt.% of carbon fibers based on that the weight of the carbon fiber reinforced polycarbonate composite sheet is 100 wt.%.

The carbon fiber reinforced polycarbonate composite may comprise an injection-molded carbon fiber reinforced polycarbonate composite. The injection-molded carbon fiber reinforced polycarbonate composite comprises 10-50 wt.%, preferably 20-30 wt.% of carbon fibers based on that the weight of the carbon fiber reinforced polycarbonate composite is 100 wt.%.

The functional zone comprises an electrical insulation zone and/or a structural functional zone.

The electrical insulation zone comprises an area which is used for and does not interfere with electrical signal transmission. The electrical insulation zone comprises an area for radio signal transmission or an area arranged at the periphery of (for example) a piezoelectric sensing device. The area for radio signal transmission may be an antenna area.

The functional zone may be a structural functional zone, which may comprise one or more of the following structures: a screw boss, a heat venting grill, a reinforcing rib, a hook and a speaker mesh.

Another object of the present invention is to provide a method for manufacturing the thermoplastic composite article provided according to the present invention, which comprises the steps of: inserting the composite substrate in a forming mold cavity, and
molding the coating composition into the coating and the functional zone in a gap between the forming mold cavity and the surface of the composite substrate.

The composite substrate can be obtained by injection molding of a thermoplastic composite or hot pressing of a thermoplastic composite sheet in a substrate mold cavity.

The forming mold cavity and the substrate mold cavity are preferably arranged in the same mold.

Yet another object of the present invention is to provide use of the thermoplastic composite article provided according to the present invention in an electronic product.

Still another object of the present invention is to provide an electronic product comprising the thermoplastic composite article provided by the present invention.

The method for manufacturing the thermoplastic composite article provided according to the present invention is characterized by a simple process, high efficiency, a high yield and environmental friendliness; and the obtained thermoplastic composite article, especially an electronic product housing, can have good electrical signal transmission performance or structural components with corresponding functions.

### BRIEF DESCRIPTION OF THE DRAWINGS

Figs. 1-A, 1-B and 1-C are schematic views of examples of a method for manufacturing a thermoplastic composite article according to the present invention; and
Fig. 2 is a schematic view of an example of another method for manufacturing a thermoplastic composite article according to the present invention.

The attached drawings are used to further illustrate the particular examples and methods disclosed by the present invention, but the drawings and the illustration are intended to be exemplary and not limiting.

### DETAILED DESCRIPTION OF THE INVENTION

The present invention is now described for the purpose of illustration rather than limitation. Except in particular examples or unless otherwise specified, all numbers expressing quantities, percentages and the like in the specification are to be understood as being modified in all instances by the term "about".

The thermoplastic composite article provided by the present invention comprises a matrix zone and a functional zone. The matrix zone comprises a composite substrate and a coating, the coating covers a surface of the composite substrate, and the coating and the functional zone are obtained by a reaction of a coating composition comprising the following components: one or more polyisocyanates, and one or more H-active polyfunctional compounds, wherein the H-active polyfunctional compounds are preferably one or more polyols.

For the thermoplastic composite article and the manufacturing method thereof provided by the present invention, a functional zone is formed by injection molding of a coating composition and a coating is injection-molded on a surface of a composite substrate, thus the functional and appearance requirements are met, process steps and cost are reduced, and the production efficiency and product qualification rate are improved.

### Composite substrate

The composite substrate of the present invention includes a thermoplastic composite substrate. There is no particular requirement for the thermoplastic composite substrate used in the present invention, and it is possible to use, for example, fiber reinforced thermoplastic composites and sheets for injection molding.

The present invention is especially suitable for the situation wherein a thermoplastic composite having interference effects on electrical signal transmission is used as a composite substrate, for example, a carbon fiber reinforced thermoplastic composite is used as a composite substrate. The carbon fiber reinforced thermoplastic composite may be an injection-molded material or sheet.

The present invention is also particularly suitable for the situation wherein a thermoplastic composite that is not easily molded into some fine structural members, for example, a carbon fiber reinforced thermoplastic composite sheet, is used as a composite substrate. In general, the carbon fiber reinforced thermoplastic composite sheet is not easily formed into structures such as screw bosses, heat venting grills, reinforcing ribs, hooks and speaker meshes by cutting or hot pressing.

There is no particular requirement for thermoplastic materials for the composite substrate in the present invention, as long as the materials can meet the requirements of the industry and a specific product on rigidity, toughness, environmental protection, flame retardancy, bonding strength of reinforcing materials and the like.

The thermoplastic material in the thermoplastic composite can be selected from the group consisting of: polyolefins, vinyl polymers, polyacrylates, polyamides, polyurethanes, polyureas, polyimides, polyesters, polyethers, polystyrenes, polyhydantoin, polyphenylene oxide (PPO), polyarylene sulfide, polysulfones, polycarbonates (PC), polymethyl methacrylate (PMMA), acrylonitrile-styrene copolymers (SAN), thermoplastic olefinic elastomers (TPO), thermoplastic polyurethane (TPU) and polyoxymethylene (POM).

The vinyl polymers are preferably selected from the group consisting of polyvinyl halides, poly(vinyl alcohol) and polyvinylether.

The polyamides are preferably selected from the group consisting of polyamide 66 (PA66), polyamide 6 (PA6) and polyamide 12 (PA12).

Particularly preferably, at least one thermoplastic is selected from the group consisting of polyamide 66 (PA66), polyamide 6 (PA6), polyamide 12 (PA12), phenylpropanolamine (PPA), polypropylene (PP), polyphenylene sulfide (PPS), thermoplastic polyurethane (TPU) and polycarbonate (PC) for the injection molding process.

Very particularly preferably, at least one thermoplastic is selected from the group consisting of thermoplastic polyurethane (TPU), polyamide 6 (PA6) and polycarbonate (PC).

Suitable polycarbonates include aromatic polycarbonates and/or aromatic polyester carbonates prepared according to known literatures or by methods known from literatures (for the preparation of aromatic polycarbonates, see for example, Schnell, "Chemistry and Physics of Polycarbonates", Interscience Publishers, 1964 as well as DE -AS 1 495 626, DE-A2 232 877, DE-A 2 703 376, DE-A 2 714 544, DE-A 3 000 610 and DE-A 3 832 396; and for the preparation of aromatic polyester carbonates, see for example, DE A 3 007 934).

Aromatic polycarbonates are prepared, for example, by reaction of diphenols with carbonic acid halides, preferably phosgene and/or with aromatic dicarbonic acid dihalides (Dicarbonsauredihalogeniden), preferably benzenedicarboxylic acid dihalides, by a phase boundary process, preferably using chain terminators, e.g. monophenols, and optionally using branching agents which are trifunctional or more than trifunctional, e.g. triphenols or tetraphenols. The aromatic polycarbonates can also be prepared by reaction of diphenols with e.g. diphenyl carbonate through a melt polymerization process.

The diphenols for the preparation of the aromatic polycarbonates and/or aromatic polyester carbonates are preferably those of the formula (1): 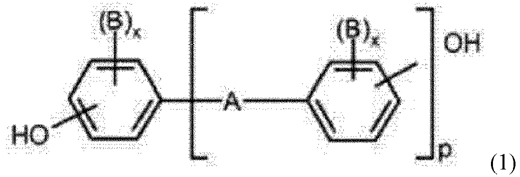 wherein
A is a single bond, C₁-C₅ alkylene, C₂-C₅ alkylidene, C₅-C₆ cycloalkylidene, -O-, -SO-, -CO-, -S-, SO₂-, C₆-C₁₂ arylene to which other aromatic rings optionally containing heteroatoms may be fused, or a group of the formula (2) or (3): 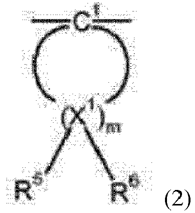 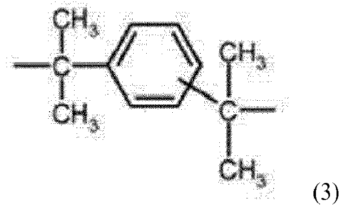
B is in each case C₁-C₁₂ alkyl, preferably methyl; halogen, preferably chlorine and/or bromine,
x is in each case independently 0, 1 or 2,
p is 1 or 0, and
R⁵ and R⁶ can be selected individually for each X¹, and are each independently hydrogen or C₁-C₆ alkyl, preferably hydrogen, methyl or ethyl,
X¹ is carbon, and
m denotes an integer from 4 to 7, preferably 4 or 5, with the proviso that R⁵ and R⁶ are both alkyl on at least one atom X¹.

Preferred diphenols include hydroquinone, resorcinol, dihydroxydiphenols, bis-(hydroxyphenyl)-C1-C5 alkanes, bis-(hydroxyphenyl)-C5-C6 cycloalkanes, bis-(hydroxyphenyl)-ethers, bis-(hydroxyphenyl)-sulfoxides, bis-(hydroxyphenyl)-ketones, bis-(hydroxyphenyl)-sulfones and α,α-bis-(hydroxyphenyl)-diisopropyl-benzenes as well as the ring-brominated and/or ring-chlorinated derivatives thereof.

Particularly preferred diphenols include 4,4'-dihydroxydiphenyl, bisphenol-A, 2,4-bis(4-hydroxyphenyl)-2-methylbutane, 1,1-bis-(4-hydroxyphenyl)-cyclohexane, 1,1-bis-(4-hydroxyphenyl)-3,3,5-trimethylcyclohexane, 4,4'-dihydroxydiphenyl sulfide, 4,4'-dihydroxydiphenyl sulfone and di- and tetrabrominated or chlorinated derivatives thereof, for example, 2,2-bis(3-chloro-4-hydroxyphenyl)-propane, 2,2-bis-(3,5-dichloro-4-hydroxyphenyl)-propane or 2,2-bis-(3,5-dibromo-4-hydroxyphenyl)-propane. 2,2-bis-(4-hydroxyphenyl)-propane (bisphenol-B) is particularly preferred.

These diphenols may be used either alone or in any mixture. The diphenols are known from literatures or obtainable by methods known from literatures.

Chain terminators suitable for the preparation of thermoplastic aromatic polycarbonates are, for example, phenol, p-chlorophenol, p-tert-butylphenol or 2,4,6-tribromophenol, but also long-chain alkylphenols such as 4-[2-(2,4,4-trimethylpentyl)]-phenol and 4-(1,3-tetramethylbutyl)-phenol according to DE-A 2 842 005, or monoalkylphenols or dialkylphenols having a total of 8 to 20 carbon atoms in alkyl substituents, such as 3,5-di-tert-butylphenol, para-iso-octylphenol, para-tert-octylphenol, para-dodecylphenol and 2-(3,5-dimethylheptyl)-phenol and 4-(3,5-dimethylheptyl)-phenol. The amount of chain terminators used is generally between 0.5 mol% and 10 mol%, based on the sum of the moles of the diphenols used in each case.

The thermoplastic aromatic polycarbonates have an average molecular weight (weight average molecular weight M, measured by GPC (gel permeation chromatography) using a polycarbonate as a standard) of 15,000-80,000 g/mol, preferably 19,000-32,000 g/mol and particularly preferably 22,000-30,000 g/mol.

The thermoplastic aromatic polycarbonates can be branched in a known manner, and more specifically, preferably by incorporation of 0.05-2.0 mol%, based on the sum of the diphenols used, of compounds which are trifunctional or more than trifunctional, for example those having three and more phenolic groups. Linear polycarbonates are preferably used and polycarbonates based on bisphenol A are more preferably used.

Both homopolycarbonates and copolycarbonates are suitable. Based on the total amount of the diphenols used, 1-25 wt.%, preferably 2.5-25 wt.% of polydiorganosiloxanes having hydroxyaryloxy end groups can also be used for the preparation of the copolycarbonates suitable for component A according to the present invention. These are known (US3 419 634) and can be prepared by methods known from literatures. Copolycarbonates containing polydiorganosiloxanes are also suitable; and the preparation of the copolycarbonates containing polydiorganosiloxane is, for example, described in DE-A 3 334 782.

Aromatic dicarboxylic acid dihalides for the preparation of the aromatic polyester carbonates are preferably diacid dichlorides of isophthalic acid, terephthalic acid, diphenyl ether-4,4'-dicarboxylic acid and naphthalene-2,6-dicarboxylic acid.

Mixtures of the diacid dichlorides of isophthalic acid and terephthalic acid in a ratio of 1:20 to 20:1 are particularly preferred. A carbonic acid halide, preferably phosgene, is additionally co-used as a bifunctional acid derivative in the preparation of polyester carbonates.

In addition to the monophenols already mentioned, chain terminators for the preparation of the aromatic polyester carbonates may also be chlorocarbonates thereof, acid chlorides of aromatic monocarboxylic acids optionally substituted by C₁-C₂₂ alkyl or halogen atoms, and aliphatic C₂-C₂₂ monocarboxylic acid chlorides.

The amount of chain terminators is in each case, 0.1-10 mol%, based on the moles of diphenols in the case of phenolic chain terminators and based on the moles of dicarboxylic acid dichlorides in the case of monocarboxylic acid chloride chain terminators.

One or more aromatic hydroxycarboxylic acids can additionally be used in the preparation of the aromatic polyester carbonates.

The aromatic polyester carbonates may be either linear or branched in a known manner (in this respect, see DE-A 2 940 024 and DE-A 3 007 934), wherein the linear polyester carbonates are preferred.

As branching agents, for example, carboxylic acid chlorides which are trifunctional or more than trifunctional may be used in an amount of 0.01-1.0 mol% (based on the dicarboxylic acid dichlorides used), such as trimesic acid trichloride, cyanuric acid trichloride, 3,3',4,4'-benzophenone-tetracarboxylic acid tetrachloride, 1,4,5,8-naphthalenetetracarboxylic acid tetrachloride or pyromellitic acid tetrachloride, or phenols which are trifunctional or more than trifunctional may be used in an amount of 0.01-1.0 mol% (based on the diphenols used), such as phloroglucinol, 4,6-dimethyl-2,4,6-tri-(4-hydroxyphenyl)-hept-2-ene, 4,6-dimethyl-2,4-6-tri-(4-hydroxyphenyl)-heptane, 1,3,5-tri-(4-hydroxyphenyl)-benzene, 1,1,1-tri-(4-hydroxyphenyl)-ethane, tri-(4-hydroxyphenyl)-phenylmethane, 2,2-bis[4,4-bis(4-hydroxyphenyl)-cyclohexyl]-propane, 2,4-bis(4-hydroxyphenyl-isopropyl)-phenol, tetra-(4-hydroxyphenyl)-methane, 2,6-bis(2-hydroxy-5-methylbenzyl)-4-methyl-phenol, 2-(4-hydroxyphenyl)-2-(2,4-dihydroxyphenyl)-propane, tetra-(4-[4-hydroxyphenyl-isopropyl]-phenoxy)-methane or 1,4-bis[4,4'-dihydroxytriphenyl)-methyl]-benzene. Phenolic branching agents can be previously introduced with the diphenols; and acid chloride branching agents can be introduced together with the acid dichlorides.

The content of carbonate structural units in the thermoplastic aromatic polyester carbonates can vary arbitrarily. The content of carbonate groups is preferably up to 100 mol%, in particular up to 80 mol%, particularly preferably up to 50 mol%, based on the sum of ester groups and carbonate groups. Both the ester portion and the carbonate portion of the aromatic polyester carbonates may be present in the form of blocks or randomly distributed in a polycondensate.

The thermoplastic aromatic polycarbonates and the polyester carbonates may be used either alone or in any mixture.

There is no particular requirement for reinforcing materials compounded with thermoplastic materials in the present invention, as long as the materials can meet the requirements of the industry and a specific product on rigidity, toughness, environmental protection, flame retardancy, bonding strength of the thermoplastic materials and the like. Reinforcing materials compounded with thermoplastic materials commonly used in the industry may be carbon fibers, glass fibers, mineral fibers, aromatic polyamide fibers and the like.

Thermoplastic composites particularly suitable for use in the present invention as composite substrates include, for example, continuous carbon fiber reinforced thermoplastic composites and sheets, or thermoplastic composites containing a large number of short carbon fibers (e.g. carbon fibers of about 8-12 mm) commonly used for injection molding.

The interference to electrical signal transmission according to the present invention refers to the shielding effect of the thermoplastic composite or its components on electrical signals, or other effects that significantly hinder or interfere with electrical signal transmission. Electrical signals may be either radio signals or circuit signals, such as signals inside a piezoelectric sensing device of an electronic product.

Preferably, the composite substrate may be prepared by either injection molding of a carbon fiber reinforced thermoplastic composite, or by subjecting a carbon fiber reinforced thermoplastic composite sheet to the steps of cutting, hot pressing and the like.

When the composite substrate is prepared by injection molding of a carbon fiber reinforced polycarbonate composite, the carbon fiber reinforced polycarbonate composite comprises 10-50 wt.%, preferably 20-30 wt.% of carbon fibers based on that the weight of the carbon fiber reinforced polycarbonate composite is 100 wt.%. In the preparation of the composite substrate by injection molding, a melt of a thermoplastic composite, e.g. a melt of a short carbon fiber reinforced polycarbonate composite can be injected into a cavity of a substrate mold and then demolded after molding.

When the composite substrate is prepared by subjecting a carbon fiber reinforced polycarbonate composite sheet to the steps of cutting, hot pressing and the like, the carbon fiber reinforced polycarbonate composite sheet comprises 10-70 wt.%, preferably 40-60 wt.% of carbon fibers based on that the weight of the carbon fiber reinforced polycarbonate composite sheet is 100 wt.%. The thermoplastic composite sheet cut according to the product design is placed in a hot pressing substrate mold for hot pressing to obtain the composite substrate.

In addition to other processes commonly used for preparing thermoplastic composite sheets in the industry, the carbon fiber reinforced thermoplastic composite sheet can be prepared by lamination and hot pressing of one or more layers of carbon fiber prepreg and/or polymer films, plastic films (e.g. PC, TPU and PA films) or foamed films, etc. The carbon fiber prepreg comprises a polycarbonate or its alloy as a matrix resin (the content by volume: 40-70%) and continuous carbon fibers (woven fabric, non-woven fabric or unidirectional fibers; the content by volume of the fibers: 30-60%), wherein the content by volume is based on that the volume of the prepreg is 100%.

In the present invention, the thermoplastic composite sheet has a thickness of e.g. 0.4-3.0 mm, preferably 0.6-1.2 mm.

Thermoplastic composite sheets that can be used in the present invention include, for example, CF FR1000, CF FR1001 and the like provided by Covestro AG.

### Coating

The coating of the present invention is obtained by injection molding of a coating composition on a surface of the composite substrate. The coating composition comprises one or more polyisocyanates, and one or more H-active polyfunctional compounds, wherein the H-active polyfunctional compounds are preferably one or more polyols. The coating composition may further optionally comprise at least one polyurethane additive and/or processing aid.

A polyurethane foam or a compact polyurethane layer is preferably used as a coating.

The polyurethane used according to the present invention is obtained by reaction of a polyisocyanates with a H-active polyfunctional compounds, preferably a polyol.

Herein, the term "polyurethane" is also understood as polyurethane urea within the scope of the present invention, wherein those compounds with N-H functionality, optionally mixed with polyols, are used as H-active polyfunctional compounds.

Suitable polyisocyanates are aromatic, araliphatic, aliphatic or cycloaliphatic polyisocyanates known per se to the person skilled in the art having an NCO functionality of preferably ≥2, which may also have iminooxadiazinedione, isocyanurate, uretdione, carbamate, allophanate, biuret, urea, oxadiazinetrione, oxazolidinone, acylurea and/or carbodiimide structures. These may be used either alone or in any ratio with one another.

Herein, the above-mentioned polyisocyanates are based on di- and triisocyanates which are known per se to the person skilled in the art and have aliphatically, cycloaliphatically, araliphatically and/or aromatically bonded isocyanate groups, wherein it is important whether these was prepared using phosgene or by phosgene-free methods. Examples of these di- and triisocyanates are 1,4-diisocyanatobutane, 1,5-diisocyanatopentane, 1,6-diisocyanatohexane (HDI), 2-methyl-1,5-diisocyanatopentane, 1,5-diisocyanato-2,2-dimethylpentane, 2,2,4- or 2,4,4-trimethyl-1,6-diisocyanatohexane, 1,10-diisocyanatodecane, 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 4,4'-diisocyanatodicyclohexylmethane (Desmodur ®W, Covestro AG, Leverkusen, Germany), 4-isocyanatomethyl-1,8-octane-diisocyanate (triisocyanatononane, TIN), ω,ω'-diisocyanato-1,3-dimethylcyclohexane (H6XDI), 1-isocyanato-1-methyl-3-isocyanatomethylcyclohexane, 1-isocyanato-1-methyl-4-isocyanatomethylcyclohexane, bis-(isocyanatomethyl)-norbornane, 1,5-naphthalene-diisocyanate, 1,3- and 1,4-bis-(2-isocyanato-prop-2-yl)-benzene (TMXDI), 2,4- and 2,6-diisocyanatotoluene (TDI), in particular, 2,4 and 2,6-isomers and technical grade mixtures of the two isomers, 2,4'- and 4,4'-diisocyanatodiphenylmethane (MDI), polymeric MDI (pMDI), 1,5-diisocyanatonaphthalene, 1,3-bis(isocyanatomethyl)benzene (XDI) and any mixture of the compounds mentioned.

Herein, the polyisocyanates preferably have an average NCO functionality of 2.0-5.0, preferably 2.2-4.5 and particularly preferably 2.2-2.7, and a content of isocyanate groups of 5.0-37.0 wt.%, preferably 14.0-34.0 wt.%. In a preferred embodiment, polyisocyanates or polyisocyanate mixtures of the above-mentioned type with exclusively aliphatically and/or cycloaliphatically bonded isocyanate groups are used.

Most particularly preferably, the polyisocyanates of the above-mentioned type are based on hexamethylene diisocyanate, isophorone diisocyanate, isomeric bis-(4,4'-isocyanatocyclohexyl)methanes and mixtures thereof.

Among the higher molecular weight modified polyisocyanates, the prepolymers having terminal isocyanate groups known from polyurethane chemistry which have a molecular weight range of 400-15000, preferably 600-12000 are of particular interest. These compounds are prepared in a manner known per se by reaction of excess amounts of simple polyisocyanates of the type mentioned by way of example with organic compounds having at least two groups which are reactive towards isocyanate groups, in particular, organic polyhydroxy compounds. Suitable such polyhydroxy compounds are both simple polyols having a molecular weight range of 82-599, preferably 62-200, e.g. ethylene glycol, trimethylolpropane, propane-1,2-diol or butane-1,4-diol or butane-2,3-diol, but in particular, higher molecular weight polyether polyols and/or polyester polyols of the type known per se from polyurethane chemistry with molecular weights of 600-12000, preferably 800-4000, which have at least two, generally 2-8, but preferably 2-6 primary and/or secondary hydroxyl groups. Those NCO prepolymers obtained, for example, from low molecular weight polyisocyanates of the type mentioned by way of example and less preferred compounds having groups which are reactive towards isocyanate groups, e.g. polythioether polyols, hydroxyl-containing polyacetals, polyhydroxy polycarbonates, hydroxyl-containing polyester amides, or hydroxyl-containing copolymers of olefinically unsaturated compounds, can of course also be used.

Compounds which have groups that are reactive towards isocyanate groups, in particular hydroxyl, and are suitable for the preparation of the NCO prepolymers are, for example, the compounds disclosed in US-A 4 218 543. In the preparation of the NCO prepolymers, these compounds having groups which are reactive towards isocyanate groups are reacted with simple polyisocyanates of the type mentioned above by way of example, while maintaining an NCO excess. The NCO prepolymers generally have an NCO content of 10-26, preferably 15-26 % by weight. This has shown that, within the scope of the present invention, "NCO prepolymers" or "prepolymers having terminal isocyanate groups" are to be understood as both the reaction products as such and the mixtures with excess amounts of unreacted starting polyisocyanates, which are often also called "semi-prepolymers".

As aliphatic diols having an OH value of >500 mg of KOH/g, chain extenders commonly used in polyurethane chemistry, such as ethylene glycol, diethylene glycol, propylene glycol, dipropylene glycol, butane-1,4-diol and propane-1,3-diol can be considered. Diols such as 2-butane-1,4-diol, butene-1,3-diol, butane-2,3-diol and/or 2-methylpropane-1,3-diol are preferred. It is of course also possible to use the aliphatic diols in any mixture with one another.

Suitable H-active components are polyols having an average OH value of 5-600 mg of KOH/g and an average functionality of 2-6. Polyols having an average OH value of 10-50 mg of KOH/g are preferred. Suitable polyols according to the present invention are, for example, polyhydroxy polyethers, which can be obtained by alkoxylation of suitable starter molecules, such as ethylene glycol, diethylene glycol, 1,4-dihydroxybutane, 1,6-dihydroxyhexane, dimethylolpropane, glycerol, pentaerythritol, sorbitol or sucrose. Ammonia or amines such as ethylenediamine, hexamethylenediamine, 2, 4-diaminotoluene, aniline or amino alcohols, or phenols such as bisphenol A, can likewise function as a starter. The alkoxylation is carried out using propylene oxide and/or ethylene oxide in any sequence or as a mixture.

In addition to polyols, it is possible to further comprise at least one additional crosslinking agent and/or chain extender selected from the group consisting of: amines and amino alcohols, for example, ethanolamine, diethanolamine, diisopropanolamine, ethylenediamine, triethanolamine, isophorone diamine, N,N'-dimethyl(diethyl)-ethylenediamine, 2-amino-2-methyl (or ethyl)-1-propanol, 2-amino-1-butanol, 3-amino-1,2-propanediol and 2-amino-2-methyl(ethyl)-1,3-propanediol, and alcohols, for example, ethylene glycol, diethylene glycol, 1,4-dihydroxybutane, 1,6-dihydroxyhexane, dimethylolpropane, glycerol and pentaerythritol, and sorbitol and sucrose, or mixtures of these compounds.

Further, polyester polyols which can for example be obtained in a manner known per se by reaction of a low molecular weight alcohol with a polycarboxylic acid, such as adipic acid, phthalic acid, hexahydrophthalic acid, tetrahydrophthalic acid or anhydrides of these acids are suitable as long as the viscosity of the H-active components does not become too high. A preferred polyol having ester groups is castor oil. In addition, formulations with castor oil which can for example be obtained by dissolving resins, e.g. aldehyde-ketone resins, and modifications of castor oil and polyols based on other natural oils are also suitable.

Those higher molecular weight polyhydroxy polyethers in which high molecular weight polyadducts or polycondensates or polymers are present in an evenly dispersed, dissolved or grafted-on form are likewise suitable. Such modified polyhydroxy compounds are obtained in a manner known per se, e.g. by carrying out a polyaddition reaction (e.g. reaction between a polyisocyanate and an amino-functional compound) or polycondensation reactions (e.g. between formaldehyde and a phenol and/or an amine) in situ in a hydroxyl-containing compound. However, it is also possible to mix a ready-made aqueous polymer dispersion with a polyhydroxy compound and then to remove water from the mixture.

For example, polyhydroxy compounds modified by vinyl polymers which are obtained e.g. by polymerization of styrene and acrylonitrile in the presence of polyether or polycarbonate polyols, are also suitable for the preparation of polyurethanes. If polyether polyols which have been modified in accordance with DE-A 2 442 101, DE-A 2 844 922 and DE-A 2 646 141 by grafting polymerization with vinylphosphonic acid esters and optionally (meth)acrylonitrile, (meth)acrylamide or OH-functional (meth)acrylates are used, plastics with particular flame retardancy are obtained.

Representatives of the compounds mentioned as H-active compounds are described, for example, in High Polymers, vol. XVI, "Polyurethanes Chemistry and Technology", Saunders-Frisch (ed.) Interscience Publishers, New York, London, vol. 1, p. 32-42, 44 and 54, and vol. II, 1984, p. 5-6 and p. 198-199. Mixtures of the compounds listed can also be used.

The increased brittleness of the resulting polyurethanes in particular leads to limitations on the average OH value and average functionality of the H-active components. However, the possibilities of influencing the physical polymer properties of the polyurethanes are known in principle to the person skilled in the art, so that the NCO components, aliphatic diols and polyols can be coordinated with one another in a favourable manner.

The polyurethane layer (b) can be foamed or solid, e.g. as a lacquer or coating.

All auxiliary agents and additives known per se, such as release agents, foaming agents, fillers, catalysts and flame retardants, can be used for the preparation thereof.

Herein, auxiliary agents and additives which can be used optionally are:

### a) Water and/or volatile inorganic or organic substances as foaming agents

Suitable organic foaming agents are, for example, acetone, ethyl acetate, halogen-substituted alkanes such as methylene chloride, chloroform, ethylidene chloride, vinylidene chloride, monofluorotrichloromethane, chlorodifluoromethane and dichlorodifluoromethane, and furthermore butane, hexane, heptane or diethyl ether, and suitable inorganic foaming agents are air, CO₂ or N₂O. A foaming action can also be achieved by addition of compounds which decompose at temperatures above room temperature to give gases such as nitrogen, e.g. azo compounds such as azodicarbonamide or azodiisobutyronitrile.

### b) Catalysts

The catalysts are, for example, tertiary amines (such as triethylamine, tributylamine, N-methylmorpholine, N-ethylmorpholine, N,N,N',N'-tetramethylethylenediamine, pentamethyldiethylenetriamine and higher homologues, 1,4-diazabicyclo-(2,2,2)octane, N-methyl-N'-dimethylaminoethylpiperazine, bis-(dimethylaminoalkyl)piperazine, N,N-dimethylbenzylamine, N,N-dimethylcyclohexylamine, N,N-diethylbenzylamine, bis-(N,N-diethylaminoethyl)adipate, N,N,N',N'-tetramethyl-1,3-butanediamine, N,N-dimethyl-β-phenylethylamine, 1,2-dimethylimidazole, and 2-methylimidazole), monocyclic and bicyclic amides, bis-(dialkylamino)alkyl ethers, tertiary amines having amide groups (preferably formamide groups),
Mannich bases derived from secondary amines (such as dimethylamine) and aldehydes (preferably formaldehyde) or ketones (such as acetone, methyl ethyl ketone or cyclohexanone) and phenols (such as phenol, nonylphenol or bisphenol),
tertiary amines having hydrogen atoms which are active towards isocyanate groups (e.g. triethanolamine, triisopropanolamine, N-methyldiethanolamine, N-ethyldiethanolamine and N,N-dimethylethanolamine) and reaction products thereof with alkylene oxides, such as propylene oxide and/or ethylene oxide,
secondary-tertiary amines,
silaamines with carbon-silicon bonds (2,2,4-trimethyl-2-silamorpholine and 1,3-diethylaminomethyltetramethyldisiloxane),
nitrogen-containing bases (e.g. tetraalkylammonium hydroxides),
alkali metal hydroxides (e.g. sodium hydroxide), alkali metal phenolates (e.g. sodium phenolate), alkali metal alcoholates (e.g. sodium methylate), and/or
hexahydrotriazines.

The reaction between NCO groups and Zerewitinoff-active hydrogen atoms is also greatly accelerated in a manner known per se by lactam and azalactam, wherein an association between the lactam and a compound with acidic hydrogen is initially formed.

Organometallic compounds, in particular organotin and/or bismuth compounds, can also be used as catalysts. In addition to sulfur-containing compounds, for example, di-n-octyl-tin mercaptide, preferably tin(II) salts of carboxylic acids, such as tin(II) acetate, tin(II) octoate, tin(II) ethylhexoate and tin(II) laurate, and tin(IV) compounds, such as dibutyltin oxide, dibutyltin dichloride, dibutyltin diacetate, dibutyltin dilaurate, dibutyltin maleate or dioctyltin diacetate can also be used as organotin compounds. Organic bismuth catalysts are described, for example, in the patent application WO 2004/000905.

All the above-mentioned catalysts can of course be used as mixtures. Herein, combinations of organometallic compounds and amidines, aminopyridines or hydrazinopyridines are of particular interest.

The catalysts are generally used in an amount of about 0.001-10 wt.% based on the total amount of compounds with at least two isocyanate-reactive hydrogen atoms.

### c) Surface-active additives, such as emulsifiers and foam stabilizers.

Suitable emulsifiers are, for example, the sodium salts of castor oil sulfonates or salts of fatty acids with amines, such as diethylamine oleate or diethanolamine stearate. Alkali metal or ammonium salts of sulfonic acids such as dodecylbenzenesulfonic acid or dinaphthylmethanedisulfonic acid, or of fatty acids such as ricinoleic acid, or of polymeric fatty acids can also be co-used as surface-active additives.

Suitable foam stabilizers are, in particular, polyether siloxanes, specifically water-soluble representatives. These compounds are in general constructed such that a copolymer of ethylene oxide and propylene oxide is bonded to a polydimethylsiloxane residue. Polysiloxane/polyoxyalkylene copolymers branched several times via allophanate groups are of particular interest.

### d) Reaction retardants

Suitable reaction retardants are, for example, acidic reactive substances (e.g. hydrochloric acid or organic acid halides).

### e) Additives

Suitable PU additives are, for example, cell regulators of the type known per se (e.g. paraffins or fatty alcohols) or dimethylpolysiloxanes and pigments or dyestuffs, and flame retardants of the type known per se (e.g. tris(chloroethyl) phosphate, tricresyl phosphate or ammonium phosphate and polyphosphate), and furthermore stabilizers against the influences of ageing and weathering, plasticizers and fungistatical and bacteriostatical active substances as well as fillers (e.g. barium sulfate, kieselguhr, carbon black or chalk powder).

Other examples of surface-active additives and foam stabilizers as well as cell regulators, reaction retardants, stabilizers, flame-retardant substances, plasticizers, dyestuffs and fillers and fungistatical and bacteriostatical active substances optionally co-used according to the present invention are known to the person skilled in the art and described in literatures.

The thickness of the coating on the surface of the composite substrate may be 50-2000 µm, preferably 50-1000 µm and more preferably 100-500 µm.

### Functional zone

The functional zone, for example, may comprise an electrical insulation zone and/or a structural functional zone.

The electrical insulation zone comprises an area for electrical signal transmission, wherein the area does not significantly interfere with electrical signal transmission. The electrical insulation zone generally has a resistance value of greater than 1012 ohms.

The electrical insulation zone may be a radio signal transmission area, e.g. an antenna area. The radio signal transmission area is mainly used for the radio signal transmission of an electronic product. According to the present invention, if a composite matrix significantly interferes with or impedes radio signal transmission, an area in need of radio signal transmission (e.g. an antenna area) should not be covered by the composite matrix. In the present invention, the electrical insulation zone is formed from the coating composition.

The electrical insulation zone may also be an area which does not interfere with circuit signal transmission, e.g. an area for electrical signal transmission of a piezoelectric sensing device. Some electronic products comprise piezoelectric sensing devices, wherein the functions and use of the electronic products can be affected in case of any interference to the electrical signals transmitted by circuits, so matrix materials which do not interfere with electrical signal transmission need to be arranged at the peripheries of the piezoelectric sensing devices in need of electrical signal transmission. In the present invention, the area is formed from the coating composition.

The structural functional zone refers to structural components which are relatively difficult to be formed simultaneously from thermoplastic composites or can be formed with affected functions when the composite substrate is formed, e.g. structures such as screw bosses, heat venting grills, reinforcing ribs, hooks and speaker meshes. The speaker meshes generally refer to sound transmission channels, such as boards or board-like areas with a plurality of holes. The holes can have different number, shapes, size, arrangements, etc. according to the design. These structural components generally are relatively difficult to be formed directly by cutting and hot pressing of thermoplastic composite sheets, and are also not very suitable to be formed by injection molding of thermoplastic composites, for example, it is not very suitable for carbon fiber reinforced thermoplastic composite sheets to be directly cut into screw bosses, or even if such structural components can be formed by injection molding of thermoplastic composites, the structures formed may interfere with e.g. electrical signal transmission, for example, an antenna area formed from a carbon fiber reinforced thermoplastic composite affects electrical signal transmission. In the present invention, these structural components can be formed by injection molding of the coating composition as appropriate.

In the present invention, the thermoplastic composite article may comprise an electrical insulation zone and a structural functional zone simultaneously or alone. The electrical insulation zone and the structural functional zone may be either separated or integrated, for example, a certain structure formed from the coating composition achieves the corresponding functions of the electrical insulation zone while having structural functions.

### Method for manufacturing a thermoplastic composite article

The present invention provides a method for manufacturing a thermoplastic composite article which comprises a matrix zone and a functional zone. The matrix zone comprises a composite substrate and a coating, the coating covers a surface of the composite substrate, and the coating and the functional zone are obtained by a reaction of a coating composition comprising the following components: one or more polyisocyanates, and one or more H-active polyfunctional compounds, wherein the H-active polyfunctional compounds are preferably one or more polyols. The method comprises the steps of: inserting the composite substrate in a forming mold cavity, and molding the coating composition into the coating and the functional zone in a gap between the forming mold cavity and the surface of the composite substrate.

The composite substrate can be prepared by injection molding of a thermoplastic composite or by subjecting a thermoplastic composite sheet to the steps of cutting, hot pressing and the like.

The mold pressure and temperature at which the coating and the functional zone are formed in the forming mold cavity are determined according to the coating composition employed, the design and requirements of the article, and the apparatus employed. In general, the mold temperature may be 50-110°C, preferably 60-100°C and more preferably 70-90°C.

The forming mold cavity comprises, in addition to a gap for forming the coating between the composite substrate and a surface of the mold cavity, a gap for forming the functional zone between the composite substrate and the surface of the mold cavity, so that the functional zone is formed from the coating composition.

The inner surface of the forming mold cavity may further comprise a planar or three-dimensional design in which a decorative pattern or texture is formed on a surface of the coating, thus a final product is more aesthetic. The inner surface of a forming mold can be designed with different surface appearance patterns and textures, etc. according to product requirements. In addition to being able to be integrally formed with the functional zone, cover the surface defects (such as floating fibers) of the article and protect the article, the coating can replicate the textures or patterns on the inner surface of the forming mold.

The method for manufacturing the thermoplastic composite article according to the present invention may further comprise the step of: forming the composite substrate by injection molding of a thermoplastic composite or by hot pressing of a thermoplastic composite sheet in a substrate mold cavity. The thermoplastic composite sheet is generally cut into the desired shape before hot pressing.

The mold pressure and temperature at which the composite substrate is prepared in the substrate mold cavity are determined according to the thermoplastic composite or its sheet used and the performance requirements on the product.

The forming mold cavity and the substrate mold cavity may be either different cavities of the same mold or different cavities of different molds.

The method for manufacturing the thermoplastic composite article according to the present invention will be described below with particular examples.

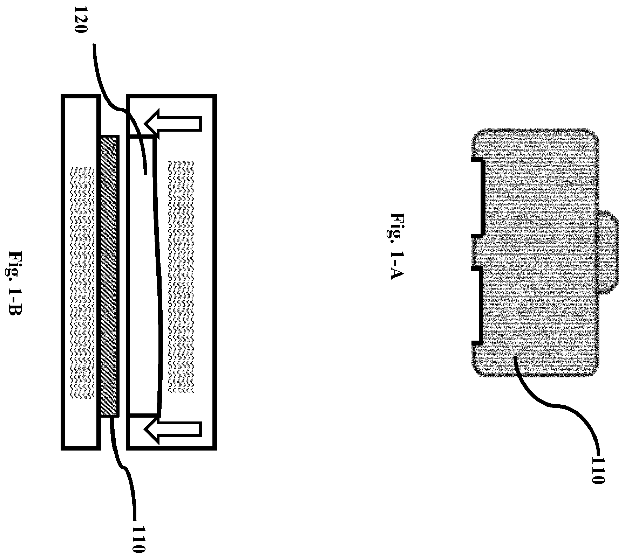

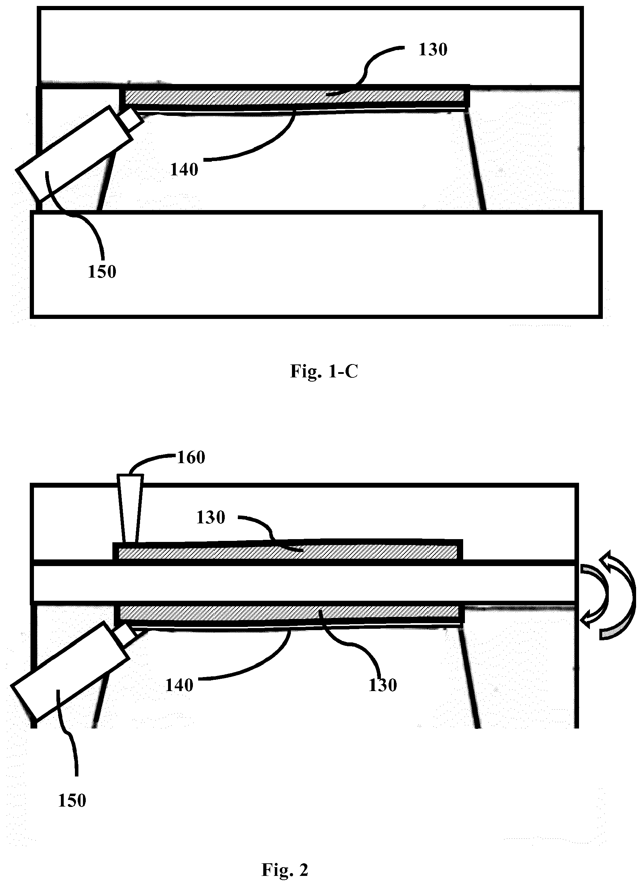

Figs. 1-A, 1-B and 1-C are schematic views of examples of a method for manufacturing a thermoplastic composite article according to the present invention. Take a carbon fiber reinforced polycarbonate composite sheet as an example. As shown in Fig. 1-A, according to the design requirements of a specific thermoplastic composite article, a carbon fiber reinforced polycarbonate composite sheet is cut into a cut member 110, and the cut-away part is generally a part reserved for preparing the functional zone. As shown in Fig. 1-B, the cut member 110 is placed in a substrate mold cavity 120 for hot pressing to prepare a composite substrate 130 (as shown in Fig. 1-C). The cut member 110 may be either preheated by an infrared oven prior to being placed in the substrate mold cavity 120, or preferably placed in a substrate mold cavity equipped with a rapid heating component such as induction heating, steam heating and air heating components, e.g. a mold equipped with a heating component from Roctool Company. The cut member 110 is heated in a substrate mold cavity with a heating component, which can shorten the production cycle.

During the process of thermoforming the composite substrate 130 in the substrate mold cavity 120, the hot pressing parameters can be determined according to the thermoplastic composite used. In general, the working temperature of a substrate mold can be set to 150-250°C, preferably 180-210°C, the mold clamping pressure can be set to 1-20 MPa, preferably 5-10 MPa, and the temperature of a substrate mold in a cooling stage can be set to 60-80°C, preferably 70-80°C.

The thermoformed composite substrate 130 is placed in a forming mold cavity of a forming mold as shown in Fig. 1-C to perform reaction injection molding of a coating composition. In the forming mold cavity, a gap 140 for injecting and molding the coating composition is reserved between the composite substrate 130 and an inner wall of the mold cavity. The coating composition is injected by an injection device 150. The gap 140 comprises gaps for molding a coating and a functional zone, wherein the size and shape of the gaps can be determined according to the product design. Generally, the thickness of the coating may be either in the range of 0.05-2.0 mm, or thinner or thicker if particularly required. During the injection molding process, the temperature of the forming mold cavity is determined according to a specific coating composition to ensure the performance stability of the resulting coating and functional zone.

After the reaction injection molding of the coating composition, the injection-molded product is removed from the forming mold cavity. Plastic tailings (if any) formed from residues remaining in a flow passage for the coating composition during the reaction injection molding process and plastic burrs (if any) formed at a parting line of the forming mold are removed to obtain the thermoplastic composite article provided by the present invention. The article manufactured according to the present invention generally does not require other coating operations, unless otherwise particularly required.

The step of thermoforming the composite substrate as shown in Fig. 1-B and the injection molding step of the coating composition as shown in Fig. 1-C can also be carried out in an injection molding apparatus which comprises both a substrate mold cavity and a forming mold cavity. For example, an Isotherm PSM 90 reaction injection molding machine can be cooperatively connected with a GP600 No. 2 mixing head for the preparation of the composite substrate and the reaction injection molding of the coating composition. When an injection molding machine comprises both a substrate mold cavity and a forming mold cavity, the composite substrate can be thermoformed in the substrate mold cavity and transferred from the substrate mold cavity to the forming mold cavity with a device such as a rotary disk or a sliding plate, and reaction injection molding of the coating composition is performed in the forming mold cavity to form the coating and/or the functional zone.

Fig. 2 is a schematic view of another method for manufacturing a thermoplastic composite article according to one example of the present invention. Take the preparation of a composite substrate from an injection-molded carbon fiber reinforced thermoplastic composite as an example. During the process for manufacturing a thermoplastic composite article as shown in Fig. 2, an injection molding machine is used in conjunction with a rotary mold, which can realize continuous production, thus further improving the production efficiency. The rotary mold comprises a substrate mold cavity and a forming mold cavity.

As shown in Fig. 2, in the substrate mold cavity of the mold, a carbon fiber reinforced thermoplastic composite injected by an injection device 160 is molded into a composite substrate 130. The composite substrate is transferred to the forming mold cavity with the rotation of the mold. In the forming mold cavity of the mold, the coating composition is injected into a gap 140 between the inner surface of the forming mold cavity and a surface of the composite substrate 130 via an injection device 150 to form the coating and the functional zone, the article provided by the present invention was obtained upon demolding.

Preferably, under continuous production conditions, a new carbon fiber reinforced thermoplastic composite substrate 130 can be injection-molded in the substrate mold cavity when the coating composition is subjected to reaction injection molding in the forming mold cavity. The molded article is removed from the forming mold. Tailings (if any) formed from residues remaining in a flow passage for the injection molding of the coating composition and plastic burrs (if any) formed at a parting line of the mold are removed to obtain the article provided according to the present invention.

When a composite substrate is prepared from an injection-molded carbon fiber reinforced polycarbonate composite, the mold temperature and material temperature can be determined according to the specific carbon fiber reinforced polycarbonate composite used. In general, the mold temperature may be 80-150°C, preferably 90-120°C, and the material temperature may be 270-330°C, preferably 290-310°C.

In combination with an appropriate mold design, structural components such as screw bosses, reinforcing ribs and hooks in the functional zone can be made on the article by the reaction injection molding of the coating composition.

The thermoplastic composite article provided according to the present invention can be used in the application for manufacturing components (especially housings) of electronic products such as mobile communication devices, mobile phones, notebook computers and tablet personal computers.

The present invention further provides an electronic product comprising a housing, wherein the housing is the thermoplastic composite article provided by the present invention. The housing may be either a housing of the entire electronic product, or a housing of a part thereof, or an internal component thereof or a housing of the component.

In the present invention, the electronic product includes mobile communication devices, notebook computers, tablet personal computers, IP cameras, smart home security systems, smart food ordering machines, communication apparatuses used in vehicles or ships or aviation tools, indoor or outdoor fixed communication apparatuses, etc., and is preferably electronic products used in components with antennas or piezoelectric sensing devices as well as other electronic products having structures which are relatively difficult to be machined, such as screw bosses, heat venting grills, reinforcing ribs, hooks and speaker meshes, and small dense holes.

Compared with the prior art, the thermoplastic composite article and the manufacturing method thereof provided by the present invention avoid production steps such as insert injection molding and multiple spray painting and have reduced production complexity, thus effectively improving the production efficiency and product qualification rate, and being favorable to environmental protection.

Although the present invention has been described above in detail for the objects of the present invention, it should be understood that such detailed description is only exemplary. Except the contents defined by the claims, those skilled in the art can make various changes without departing from the spirit and scope of the present invention.

## Claims

1. A thermoplastic composite article, comprising a matrix zone and a functional zone, the matrix zone comprising a composite substrate and a coating, the coating covering a surface of the composite substrate, and the coating and the functional zone being obtained by a reaction of a coating composition comprising the following components: one or more polyisocyanates, and one or more H-active polyfunctional compounds, wherein the H-active polyfunctional compounds are preferably one or more polyols.

2. The thermoplastic composite article according to claim 1, wherein the composite substrate comprises a carbon fiber reinforced polycarbonate composite.

3. The thermoplastic composite article according to claim 1 or 2, wherein the composite substrate comprises a carbon fiber reinforced polycarbonate composite sheet.

4. The thermoplastic composite article according to claim 3, wherein the carbon fiber reinforced polycarbonate composite sheet comprises 10-70 wt.%, preferably 40-60 wt.% of carbon fibers based on that the weight of the carbon fiber reinforced polycarbonate composite sheet is 100 wt.%.

5. The thermoplastic composite article according to claim 1 or 2, wherein the composite substrate comprises an injection-molded carbon fiber reinforced polycarbonate composite.

6. The thermoplastic composite article according to claim 5, wherein the injection-molded carbon fiber reinforced polycarbonate composite comprises 10-50 wt.%, preferably 20-30 wt.% of carbon fibers based on that the weight of the injection-molded carbon fiber reinforced polycarbonate composite is 100 wt.%.

7. The thermoplastic composite article according to claim 1 or 2, wherein the functional zone comprises an electrical insulation zone and/or a structural functional zone.

8. The thermoplastic composite article according to claim 7, wherein the electrical insulation zone comprises an area for electrical signal transmission.

9. The thermoplastic composite article according to claim 8, wherein the area for electrical signal transmission comprises an area for radio signal transmission or an area arranged at the periphery of a piezoelectric sensing device.

10. The thermoplastic composite article according to claim 7, wherein the structural functional zone comprises one or more of the following structures: a screw boss, a heat dissipation grid, a reinforcing rib, a hook and a speaker mesh.

11. A method for manufacturing the thermoplastic composite article according to any one of claims 1-10, comprising the steps of:
inserting the composite substrate in a forming mold cavity, and
molding the coating composition into the coating and the functional zone in a gap between the forming mold cavity and the surface of the composite substrate.

12. The manufacturing method according to claim 11, wherein the composite substrate is obtained by injection molding of a thermoplastic composite or by hot pressing of a thermoplastic composite sheet in a substrate mold cavity.

13. The manufacturing method according to claim 12, wherein the forming mold cavity and the substrate mold cavity are in the same mold.

14. Use of the thermoplastic composite article according to any one of claims 1-10 in the preparation of an electronic product.

15. An electronic product, comprising a housing, wherein the housing includes the thermoplastic composite article provided according to any one of claims 1-10.
